(19) Europäisches Patentamt
European Patent Office
Office européen des brevets

(11) **EP 2 908 229 A1**

(12) **EUROPEAN PATENT APPLICATION**

(43) Date of publication:
**19.08.2015 Bulletin 2015/34**

(51) Int Cl.:
***G06F 3/041*** *(2006.01)*  ***G06F 3/044*** *(2006.01)*

(21) Application number: **15155317.9**

(22) Date of filing: **17.02.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **18.02.2014 JP 2014028211**

(71) Applicant: **Nidec-Read Corporation**
**Ukyo-ku**
**Kyoto-shi**
**Kyoto 615-0854 (JP)**

(72) Inventors:
• **Kusuda, Tatsufumi**
  **Kyoto, 615-0854 (JP)**
• **Honda, Mutsuhiro**
  **Kyoto, 615-0854 (JP)**
• **Kurihara, Yasuhito**
  **Kyoto, 615-0854 (JP)**

(74) Representative: **Viering, Jentschura & Partner**
**Patent- und Rechtsanwälte**
**Grillparzerstrasse 14**
**81675 München (DE)**

(54) **Method for detecting touched position on touch panel, method and apparatus for inspecting a touch panel**

(57)     A method for detecting a touched position on a touch panel (100) includes: acquiring a capacitance value (S2, 3) detected in each sensing area (101) of the touch panel; correcting each capacitance value (13), based on a correlation value table (6) that stores therein a numerical influence to be exerted on the capacitance value in each sensing area by the capacitance value in the sensing area adjacent to each sensing area, and calculating a correlation correction value for each sensing area (S4); retrieving the maximum value from among the correlation correction values (S12, 14); and defining the sensing area for which the correlation correction value is the maximum value, as a maximum area, calculating a centroid position as to an area including the maximum area and the sensing areas adjacent to the maximum area, based on the correlation correction values (S16), and acquiring the calculated centroid position as a touched position (S17, 15).

FIG. 2

**Description**

BACKGROUND

Technical Field

This disclosure relates to a method for detecting a touched position on a touch panel; a method for inspecting a touch panel, using the touched position detecting method; and a touch panel inspecting apparatus.

Related Art

In a known touch panel, a touched position has been detected by a centroid method that involves measuring capacitances of sensing areas arranged in a lattice form, and calculating a centroid position, based on capacitance values in the respective sensing areas (refer to, for example, JP 2013-134698 A).

According to the method of detecting, as the touched position, the centroid position based on the capacitance values in the respective sensing areas, however, the touched position is detected with low accuracy.

SUMMARY

An exemplary embodiment of the disclosure provides a method for detecting a touched position on a touch panel, the method capable of detecting the touched position with improved accuracy; a method for inspecting a touch panel, using the touched position detecting method; and a touch panel inspecting apparatus.

An exemplary embodiment of the disclosure provides a method for detecting a touched position on a touch panel having a touch screen divided into a plurality of sensing areas arranged in a lattice form and designated with two-dimensional coordinates, the method including: acquiring a detection value detected in each sensing area; a correcting step of correcting each detection value, based on a correlation value corresponding to a numerical influence to be exerted on the detection value in each sensing area by the detection value in the sensing area adjacent to each sensing area, and calculating a correlation correction value for each sensing area; retrieving the maximum value from among the correlation correction values; and a touched position acquiring step of defining the sensing area for which the correlation correction value is the maximum value, as a maximum area, calculating a centroid position as to an area including the maximum area and the sensing areas adjacent to the maximum area, based on the correlation correction values, and acquiring the calculated centroid position as a touched position.

According to this configuration, the method involves correcting the detection value detected in each sensing area on the touch panel, based on the correlation value corresponding to the numerical influence exerted on the detection value in each sensing area by the detection value in the sensing area adjacent to each sensing area; and calculating the correlation correction value for each sensing area. The method also involves retrieving the maximum value from among the correlation correction values thus obtained; calculating the centroid position as to the area including the maximum area for which the correlation correction value is the maximum area and the sensing areas adjacent to the maximum area, based on the correlation correction values; and acquiring the centroid position as the touched position. According to the method, the touched position is acquired based on the correlation correction value with the influence of the sensing area adjacent to each sensing area taken into consideration. Therefore, it is possible to detect the touched position with improved accuracy.

Preferably, the method further includes: decreasing the correlation correction value for the maximum area after the acquisition of the touched position in the touched position acquiring step; and subsequently acquiring a new touched position by repeating the maximum value retrieving step and the touched position acquiring step again after the execution of the preparing step.

According to this configuration, the method is capable of detecting the plurality of touched positions, based on the correlation correction values. Therefore, it is possible to realize a so-called multi-touch function.

Preferably, further, the correlation correction values for the sensing areas surrounding the maximum area are corrected based on the correlation correction values for the outer sensing areas adjacent to and located outward of the sensing areas surrounding the maximum area.

According to this configuration, it is possible to eliminate the influence of touch exerted on the touched position which has been detected, with higher accuracy upon retrieval of the new touched position.

Preferably, the new touched position is not acquired when a ratio of the maximum value retrieved in the repeated maximum value retrieving step to the maximum value retrieved initially in the maximum value retrieving step is less than a preset reference ratio.

According to this configuration, it is possible to reduce a possibility of erroneously detecting, as the touched position, the sensing area in which the ratio to the maximum value retrieved initially, that is, the correlation correction value obtained based on the detection value detected upon the touch of the touch panel is less than the reference ratio.

Preferably, the correlation values include a target area correlation value specified for a target area corresponding to the sensing area to be processed, a first correlation value specified for each first sensing area adjacent to the target area in a row direction or a column direction, and a second correlation value specified for each second sensing area adjacent to the target area in a diagonal direction, the first correlation value is smaller than the target area correlation value, the second correlation value is smaller than the first correlation value, and the correcting step includes calculating the correlation correction value for the target area by allocating the sensing areas to the target area in sequence, and adding a value obtained by multiplying the detection value in the target area by the target area correlation value, a value obtained by multiplying the detection value in each first sensing area by the first correlation value, and a value obtained by multiplying the detection value in each second sensing area by the second correlation value.

According to this configuration, a tangent to the target area is long. Moreover, the first correlation value in the first sensing area which exerts a large influence on the target area is larger than the second correlation value in the second sensing area which is in slight contact with the target area. As a result, it is possible to appropriately reflect the degree of the influence exerted on the target area, on the first and second correlation values.

Preferably, the correlation correction value for the sensing area located on an edge of the touch screen, among the plurality of sensing areas is set to be equal to the correlation correction value for the sensing area adjacent to and located inward of the sensing area located on the edge of the touch screen.

The number of sensing areas adjacent to the sensing area located on the edge of the touch screen is smaller than the number of sensing areas adjacent to the sensing area located inward of the touch screen. Therefore, when the correlation correction value for the sensing area located on the edge is calculated in a manner similar to that for calculating the correlation correction value for the sensing area located inward of the touch screen, the calculated correlation correction value is not appropriate in some cases. According to this configuration, on the other hand, the correlation correction value for the sensing area located on the edge of the touch screen is set to be equal to the correlation correction value for the sensing area adjacent to and located inward of the sensing area located on the edge. Therefore, it is possible to improve the appropriateness of the correlation correction value for the sensing area located on the edge.

An exemplary embodiment of the disclosure provides a method for inspecting a touch panel, the method including: bringing one or more pseudo fingers into contact with a touch screen of a touch panel, the touch screen divided into a plurality of sensing areas arranged in a lattice form and designated with two-dimensional coordinates; performing the foregoing touched position detecting method on the touch panel; and determining whether or not at least one of deviation amounts between one or more detected touched positions and one or more contact positions on the touch screen with the one or more pseudo fingers in the touch processing step exceeds a preset reference amount.

According to this configuration, the method involves determining whether or not the deviation amount between the touched position which is detected by the foregoing touched position detecting method with high accuracy and the contact position on the touch screen with the pseudo finger exceeds the reference amount. Therefore, it is possible to inspect the touch panel with improved accuracy.

An exemplary embodiment of the disclosure provides a touch panel inspecting apparatus including: a touch mechanism configured to bring one or more pseudo fingers into contact with a touch screen of a touch panel, the touch screen divided into a plurality of sensing areas arranged in a lattice form and designated with two-dimensional coordinates; a touched position detecting part configured to perform the foregoing touched position detecting method on the touch panel; and a determining part configured to determine whether or not at least one of deviation amounts between one or more touched positions detected by the touched position detecting part and one or more contact positions on the touch screen with the one or more pseudo fingers by the touch mechanism exceeds a preset reference amount.

According to this configuration, the touch panel inspecting apparatus determines whether or not the deviation amount between the touched position which is detected by the foregoing touched position detecting method with high accuracy and the contact position on the touch screen with the pseudo finger exceeds the reference amount. Therefore, it is possible to inspect the touch panel with improved accuracy.

An exemplary embodiment of the disclosure provides a touch panel inspecting apparatus including: a touch mechanism configured to bring one or more pseudo fingers into contact with a touch screen of a touch panel, the touch screen divided into a plurality of sensing areas arranged in a lattice form and designated with two-dimensional coordinates; a detection processing part configured to acquire a detection value detected in each sensing area; a correcting part configured to correct each detection value, based on a correlation value corresponding to a numerical influence to be exerted on the detection value in each sensing area by the detection value in the sensing area adjacent to each sensing area, and to calculate a correlation correction value for each sensing area; a maximum value retrieving part configured to retrieve the maximum value from among the correlation correction values; a touched position acquiring part configured to define the sensing area for which the correlation correction value is the maximum value, as a maximum area, to calculate a centroid position as to an area including the maximum area and the sensing areas adjacent to the maximum area, based on the correlation correction values, and to acquire the calculated centroid position as a touched position; and a determining part configured to determine whether or not at least one of deviation amounts between one or more touched positions detected by the touched position acquiring part and one or more contact positions on the touch screen with the one or more pseudo fingers by the touch mechanism exceeds a preset reference amount.

According to this configuration, the touch panel inspecting apparatus acquires the touched position, based on the correlation correction value with the influence of the sensing area adjacent to each sensing area taken into consideration, in a manner similar to that according to the foregoing touched position detecting method. Therefore, it is possible to detect the touched position with improved accuracy. Moreover, the touch panel inspecting apparatus determines whether or not the deviation amount between the touched position detected with high accuracy and the contact position on the touch panel with the pseudo finger exceeds the reference amount. Therefore, it is possible to inspect the touch panel with improved accuracy.

According to the method for detecting a touched position on a touch panel, the method for inspecting a touch panel, and the touch panel inspecting apparatus, it is possible to detect a touched position with improved accuracy.

The foregoing and other objects, features, aspects, and advantages of the disclosed invention will become more apparent from the following detailed description, when taken in conjunction with the accompanying drawings.

BRIEF DESCRIPTION OF DRAWINGS

FIG. 1 is a perspective view schematically illustrating one example of a configuration of a touch panel inspecting apparatus that employs a method for detecting a touched position on a touch panel in accordance with an exemplary embodiment of the disclosure;

FIG. 2 is a block diagram illustrating one example of an electrical configuration of the touch panel inspecting apparatus illustrated in FIG. 1;

FIGS. 3 to 5 are flowcharts each illustrating one example of operation of the touch panel inspecting apparatus illustrated in FIG. 2;

FIG. 6 illustrates one example of a capacitance value detected in a detection processing step;

FIG. 7 illustrates one example of a correlation value table;

FIGS. 8 and 9 each illustrate one example of a correlation correction value;

FIG. 10 illustrates a method of calculating a centroid position, in a touched position acquiring step;

FIG. 11 illustrates processing in a preparing step;

FIG. 12 illustrates one example of the correlation correction value;

FIG. 13 illustrates the method of calculating a centroid position, in the touched position acquiring step; and

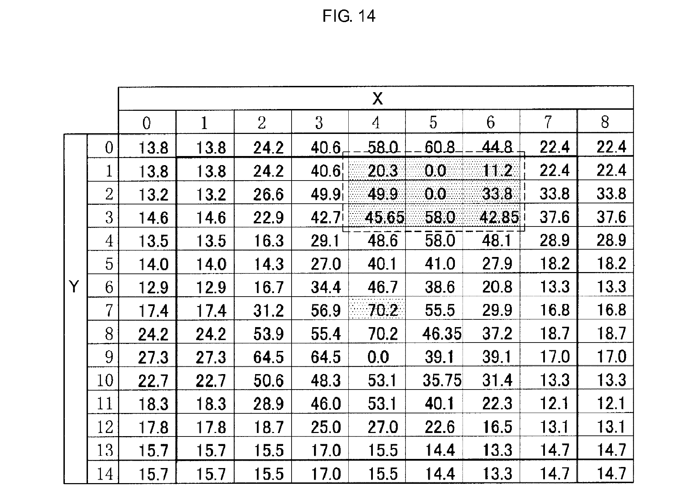

FIG. 14 illustrates the processing in the preparing step.

DETAILED DESCRIPTION

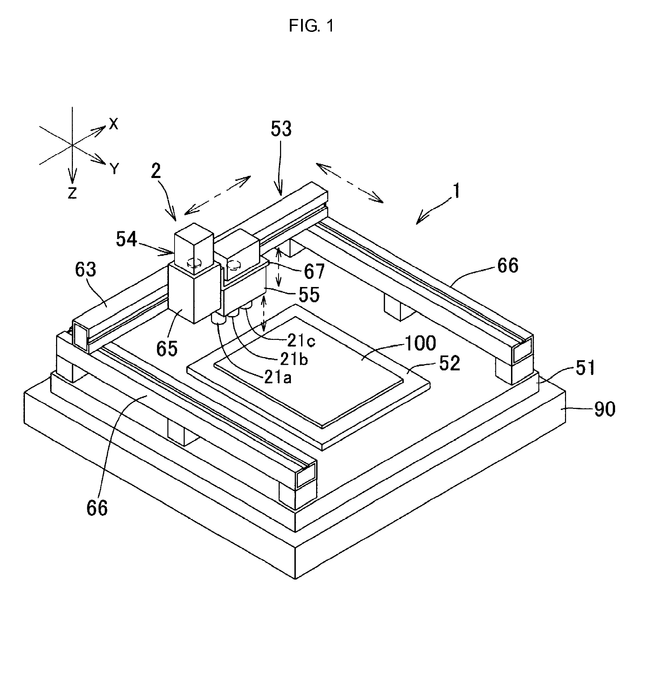

Various embodiments of the disclosure will be described below with reference to the drawings. In the respective drawings, constituents denoted with the same reference sign are identical with one another; therefore, the repeated description thereof will not be given here. FIG. 1 is a perspective view schematically illustrating one example of a configuration of a touch panel inspecting apparatus that employs a method for detecting a touched position on a touch panel in accordance with an exemplary embodiment of the disclosure. As illustrated in FIG. 1, the touch panel inspecting apparatus 1 is mounted on a horizontal workbench 90.

The touch panel inspecting apparatus 1 includes a base 51, a workpiece holder 52, pseudo fingers 21a, 21b, and 21c, and a pseudo finger drive mechanism 2 (a touch mechanism). The pseudo finger drive mechanism 2 includes an X-Y movement mechanism 53, a Z movement mechanism 54, and a pseudo finger mechanism 55. The base 51 has a horizontal upper surface, and an X axis and a Y axis which are orthogonal to each other are defined within a plane parallel with the horizontal upper surface. Moreover, a Z axis is defined in a direction perpendicular to the X-Y plane.

The workpiece holder 52 on the base 51 holds a flat plate-shaped touch panel 100, which is an inspection target, with a front surface of the touch panel 100 directed upward. The touch panel 100 is formed into a substantially rectangular shape. The touch panel 100 has a touch screen divided into a plurality of sensing areas arranged in a substantially lattice form. Each sensing area can be designated with two-dimensional coordinates.

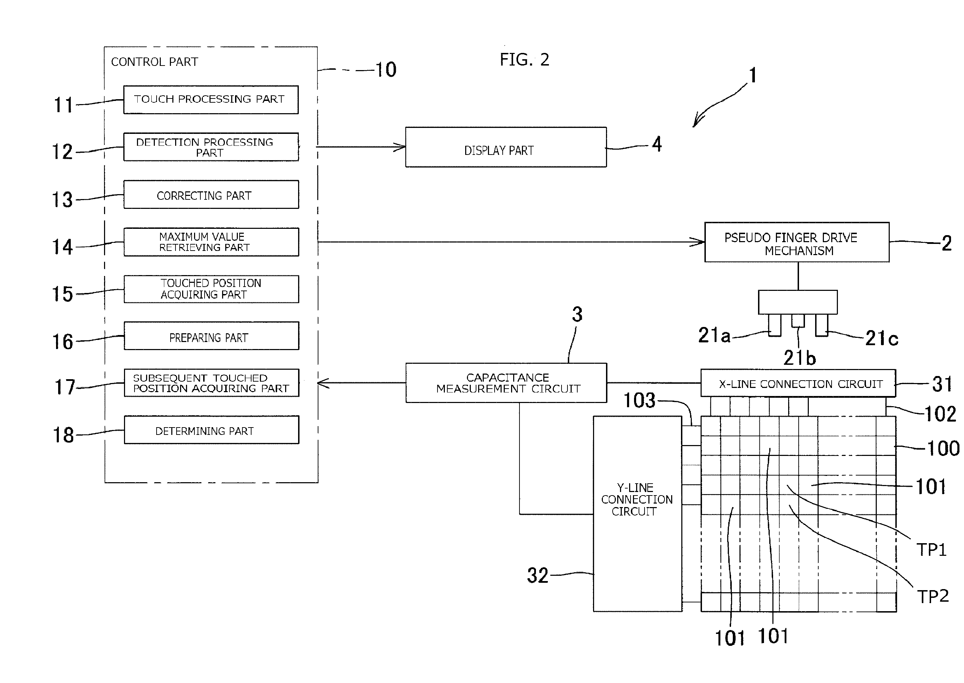

The touch panel 100 to be inspected may be of, for example, a capacitive type or a resistive film type. The touch panel inspecting apparatus 1 is capable of inspecting various types of touch panels. In the following, a description will be given of a case where the touch panel 100 is of the capacitive type. The touch screen of the touch panel 100 has a plurality of X electrodes 102 formed at predetermined intervals along an X direction (row direction) so as to extend in a Y direction (column direction), and a plurality of Y electrodes 103 formed at predetermined intervals along the Y direction so as to extend in the X direction (see FIG. 2).

The touch screen of the touch panel 100 is divided into the plurality of sensing areas arranged in the lattice form. Each sensing area can be selected by a combination of the X electrode 102 with the Y electrode 103. The touch panel inspecting apparatus 1 selects the X electrodes 102 and the Y electrodes 103 one by one, and measures the capacitance between the selected X electrode 102 and the selected Y electrode 103. Thus, the touch panel inspecting apparatus 1 measures a capacitance value (detection value) in the sensing area on coordinates designated with the selected X electrode 102 and the selected Y electrode 103. In the case where the touch panel 100 is of, for example, the resistive film type, the touch panel inspecting apparatus 1 detects a resistance value as the detection value.

When a user touches the touch screen with, for example, his/her finger, the capacitance increases in the sensing area on the touch screen touched by the user. Accordingly, it is possible to identify the sensing area on the touch screen touched by the user by selecting the X electrodes 102 and the Y electrodes 103 in sequence and measuring the capacitance value in each sensing area. In other words, it is possible to detect the position touched by the user (i.e., the touched position). At this time, the capacitance value also varies in the sensing area located around the sensing area corresponding to the touched position, depending on a length from the touched position.

Hence, arithmetic processing is performed based on the capacitance values detected in the plurality of sensing areas. Thus, it is possible to detect the touched position with a high resolution. As described in Related Art, heretofore, a touched position has been detected by calculating a centroid position based on capacitance values detected in sensing areas.

The inventors have found that a capacitance between a certain sensing area and a user's finger and a capacitance between a different sensing area and the user's finger exert an influence on a capacitance value in each sensing area. Moreover, the inventors have found that a touched position is calculated by the centroid method with degraded accuracy because of the influence exerted between the sensing areas. Particularly, the influence exerted between the sensing areas becomes remarkable in a case of touching a touch screen with plural fingers, that is, in a case of a multi-touch. As a result, it is difficult to detect the positions touched with the respective fingers because of degradation in detection accuracy.

Upon actual use of a touch panel installed in equipment, typically, an IC (Integrated Circuit) chip is incorporated in the touch panel in order to calculate a touched position from a detection value. In a case of inspecting the touch panel having the IC chip incorporated therein, however, if the touch panel is a defective, the IC chip incorporated in the defective touch panel is wasted.

Hence, the touch panel inspecting apparatus 1 performs the touched position detecting method on a touch panel having incorporated therein no IC chip for calculating a touched position, thereby detecting a touched position. The touch panel inspecting apparatus 1 inspects the touch panel, based on the touched position thus obtained.

The X-Y movement mechanism 53 corresponds to a biaxial planar movement mechanism and is mounted on the base 51. The X-Y movement mechanism 53 allows the pseudo finger mechanism 55 to move to an arbitrary position within the X-Y plane parallel with a surface of the base 51 (i.e., a surface of the touch panel 100 to be described later). The Z movement mechanism 54 is attached to the X-Y movement mechanism 53. The Z movement mechanism 54 allows the pseudo finger mechanism 55 to move in a Z-axis direction orthogonal to the X-Y plane.

Specifically, the X-Y movement mechanism 53 includes linear guides 66 and 66, a first carriage 63, and a second carriage 65. The linear guides 66 and 66 are disposed to extend in parallel with the Y axis. The first carriage 63 extends in parallel with the X axis and is capable of translating in a Y-axis direction along the linear guides 66 and 66. The second carriage 65 is supported by the first carriage 63 and is capable of rectilinearly moving in an X-axis direction along the first carriage 63.

The second carriage 65 supports a bracket 67 so as to drive the bracket 67 in the Z-axis direction. The pseudo finger mechanism 55 is attached to the bracket 67. Thus, the second carriage 65 allows the pseudo finger mechanism 55 to move along the Z-axis direction.

The pseudo finger mechanism 55 holds, for example, the three pseudo fingers 21a, 21b, and 21c linearly arranged at equal intervals. Each of the pseudo fingers 21a, 21b, and 21c is formed of a rod-shaped member extending in the Z-axis direction. The pseudo finger mechanism 55 allows the pseudo fingers 21a, 21b, and 21c to protrude toward the touch panel 100 such that the pseudo fingers 21a, 21b, and 21c touch (contact with) the touch panel 100. Examples of the pseudo finger mechanism 55 may include various actuators such as an air cylinder and a solenoid.

The pseudo finger mechanism 55 is supported by the bracket 67 via a pivot extending in the Z-axis direction so as to be rotatable about the pivot. This configuration allows a change in alignment angle of the pseudo fingers 21a, 21b, and 21c.

The invention is not limited to the example that the X-Y movement mechanism 53 moves the pseudo fingers 21a, 21b, and 21c. For example, the touch panel 100 may be moved by an X-Y table.

FIG. 2 is a block diagram illustrating one example of an electrical configuration of the touch panel inspecting apparatus 1 illustrated in FIG. 1. The touch panel inspecting apparatus 1 illustrated in FIG. 2 includes the pseudo finger drive mechanism 2, a capacitance measurement circuit 3, an X-line connection circuit 31, a Y-line connection circuit 32, a display part 4, and a control part 10 (a touched position detecting part).

The pseudo finger drive mechanism 2 allows each of the pseudo fingers 21a, 21b, and 21c to touch an arbitrary coordinate position on the touch panel 100, in accordance with a control signal from the control part 10. The X-line connection circuit 31 is connected to the X electrodes 102 of the touch panel 100.

The X-line connection circuit 31 corresponds to a switch circuit that selects one of the X electrodes 102 in accordance with a control signal from the control part 10, and then connects the selected X electrode 102 to the capacitance measurement circuit 3. The Y-line connection circuit 32 corresponds to a switch circuit that selects one of the Y electrodes 103 in accordance with a control signal from the control part 10, and then connects the selected Y electrode 103 to the capacitance measurement circuit 3.

The capacitance measurement circuit 3 measures the capacitance of the sensing area 101 designated with the X electrode 102 selected by the X-line connection circuit 31 and the Y electrode 103 selected by the Y-line connection circuit 32, and outputs the capacitance value to the control part 10.

The display part 4 may be, for example, a liquid crystal display device or a display device including an LED (Light Emitting Diode). The display part 4 displays thereon an inspection result of the touch panel 100.

The control part 10 includes, for example, a CPU (Central Processing Unit) for executing predetermined arithmetic processing, a RAM (Random Access Memory) for temporarily storing data, a ROM (Read Only Memory) or an HDD (Hard Disk Drive) for storing a predetermined control program, and peripheral circuits of these components.

The control part 10 executes, for example, the control program stored in the ROM, thereby functioning as a touch processing part 11, a detection processing part 12, a correcting part 13, a maximum value retrieving part 14, a touched position acquiring part 15, a preparing part 16, a subsequent touched position acquiring part 17, and a determining part 18.

The touch processing part 11 executes a touch processing step in which the pseudo finger drive mechanism 2 allows the pseudo fingers 21a, 21b, and 21c to touch (contact with) inspection coordinates on the touch panel 100, respectively. In an illustrative embodiment, the touch processing part 11 controls the pseudo finger drive mechanism 2 such that the pseudo finger 21a touches an inspection coordinate TP1 on the touch panel 100 and the pseudo finger 21c touches an inspection coordinate TP2 on the touch panel 100.

The detection processing part 12 controls the X-line connection circuit 31 and the Y-line connection circuit 32 such that the X-line connection circuit 31 and the Y-line connection circuit 32 select the sensing areas 101 in sequence. Moreover, the detection processing part 12 controls the capacitance measurement circuit 3 such that the capacitance measurement circuit 3 measures the capacitance value in each sensing area 101. Thus, the detection processing part 12 acquires the capacitance value detected in each sensing area 101.

The correcting part 13 executes a correcting step of correcting each capacitance value, based on a correlation value table that stores therein a numerical influence to be exerted on the capacitance value in each sensing area 101 by the capacitance value in the sensing area 101 adjacent to each sensing area 101, and then calculating a correlation correction value for each sensing area 101.

The maximum value retrieving part 14 executes a maximum value retrieving step of retrieving the maximum value from among the correlation correction values.

The touched position acquiring part 15 executes a touched position acquiring step of defining the sensing area for which the correlation correction value is the maximum value, as a maximum area, calculating a centroid position as to an area including the maximum area and the sensing areas adjacent to the maximum area, based on the correlation correction values, and acquiring the calculated centroid position as a touched position.

The preparing part 16 executes a preparing step of decreasing the correlation correction value for the maximum area after the touched position acquiring part 15 acquires the touched position. In the preparing step, moreover, the preparing part 16 corrects the correlation correction values for the sensing areas surrounding the maximum area, based on the correlation correction values for the outer sensing areas adjacent to and located outward of the sensing areas surrounding the maximum area.

The subsequent touched position acquiring part 17 repeats the maximum value retrieving step and the touched position acquiring step again after the execution of the preparing step, thereby acquiring a new touched position.

The determining part 18 determines that the touch panel 100 is a defective, when at least one of deviation amounts between one or more touched positions acquired in the touched position acquiring step and one or more contact positions on the touch screen with the one or more pseudo fingers in the touch processing step exceeds a preset reference amount.

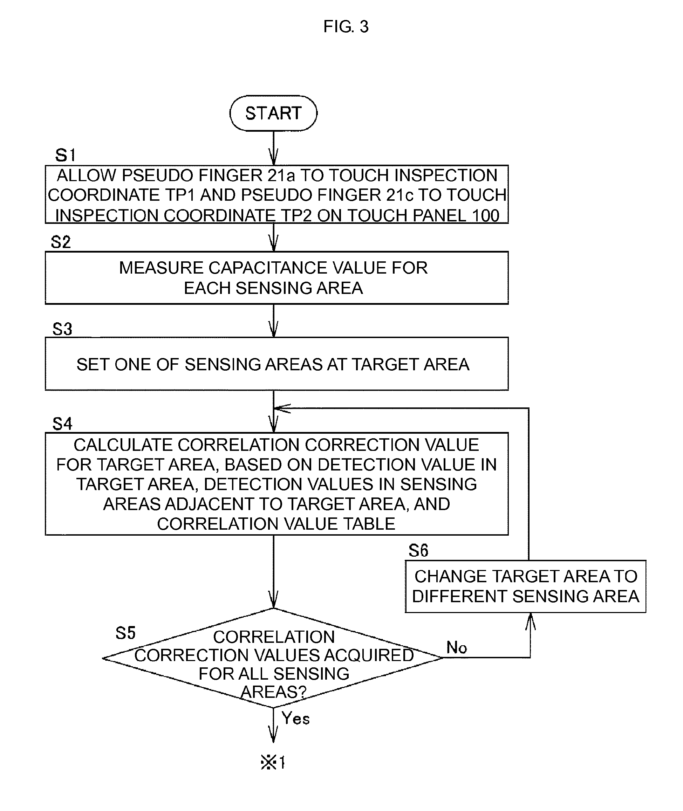

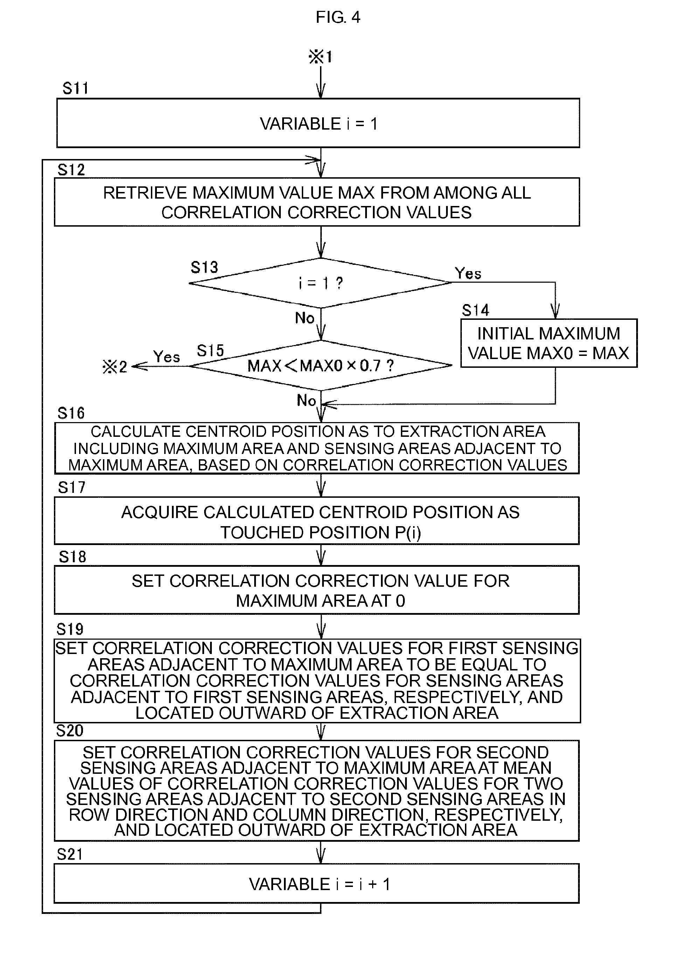

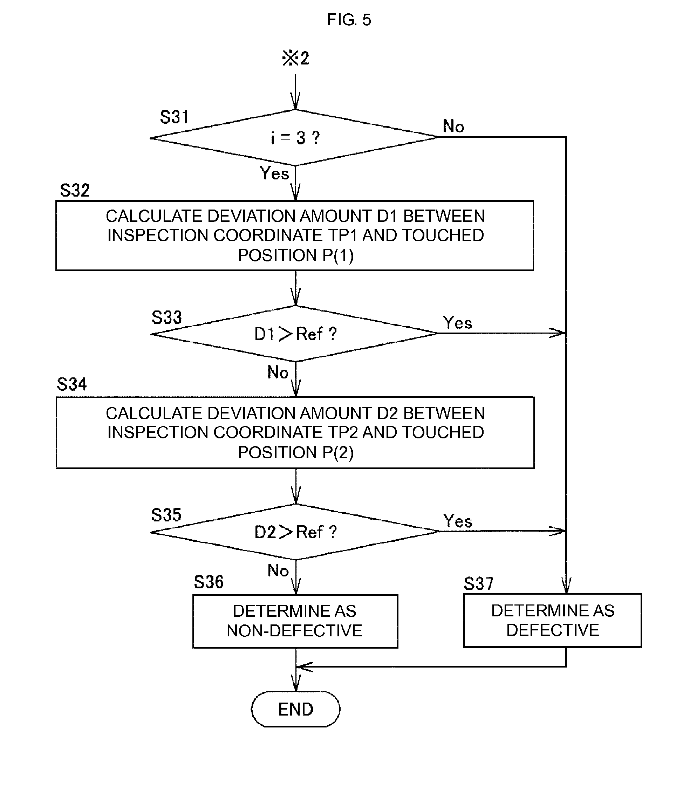

FIGS. 3 to 5 are flowcharts each illustrating one example of the operation of the touch panel inspecting apparatus 1 illustrated in FIG. 2. First, the touch processing part 11 controls the pseudo finger drive mechanism 2 such that the pseudo finger 21a touches the inspection coordinate TP1 on the touch panel 100 and the pseudo finger 21c touches the inspection coordinate TP2 on the touch panel 100 (step S1: touch processing step).

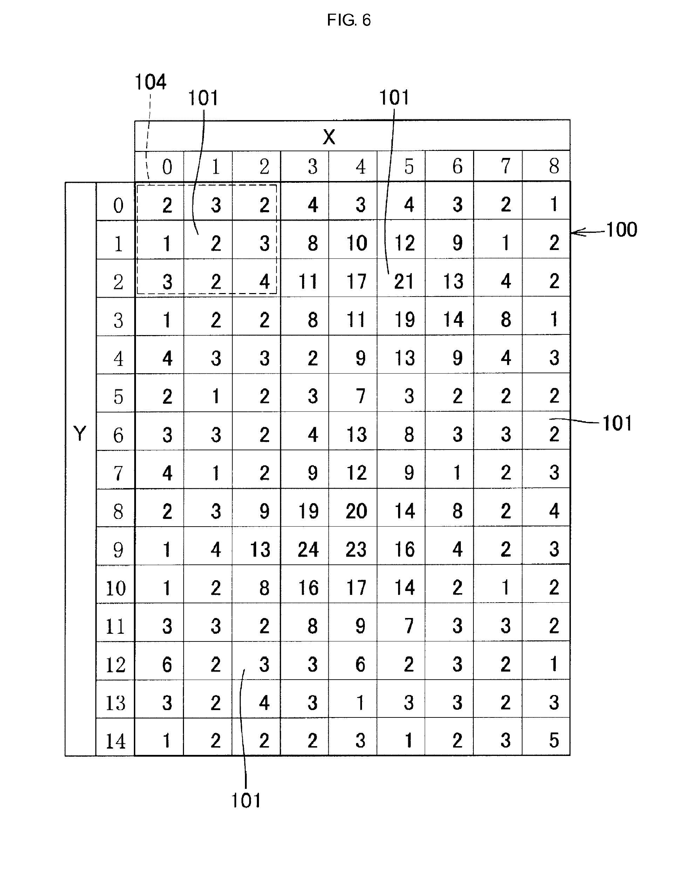

Next, the detection processing part 12 controls the capacitance measurement circuit 3 such that the capacitance measurement circuit 3 measures the capacitance value in each sensing area 101, and acquires the capacitance value detected in each sensing area 101 (step S2: detection processing step). FIG. 6 illustrates one example of the capacitance value detected in the detection processing step of step S2. As illustrated in FIG. 6, the touch panel 100 is divided into 135 sensing areas 101 arranged in nine columns of 0 to 8 along the X direction and arranged in 15 rows of 0 to 14 along the Y direction. Each sensing area 101 can be designated with coordinates (X, Y).

In the example illustrated in FIG. 6, the capacitance value (pF) detected in each sensing area 101 in the detection processing step of step S2 is described in a grid indicating the corresponding sensing area. As to the sensing area 101 on coordinates (0, 0), for example, a coordinate range is set as follows. That is, the X coordinate ranges from 0.00 to 0.99, and the Y coordinate ranges from 0.00 to 0.99. As to the sensing area 101 on coordinates (5, 2), for example, a coordinate range is set as follows. That is, the X coordinate ranges from 5.00 to 5.99, and the Y coordinate ranges from 2.00 to 2.99.

Next, the correcting part 13 executes the correcting step in steps S3 to S6. First, the correcting part 13 sets one of the sensing areas 101 at a target area (step S3). Next, the correcting part 13 calculates a correlation correction value for the target area, based on the capacitance value in the target area, the capacitance values in the sensing areas adjacent to the target area, and the correlation value table obtained by a correlation function method (step S4).

Specifically, the correcting part 13 selects the sensing area 101 on coordinates (1, 1) as a target area, and extracts a processing target area 104 corresponding to a 3 by 3 matrix of sensing areas 101 including the target area and the sensing areas 101 adjacent to the target area.

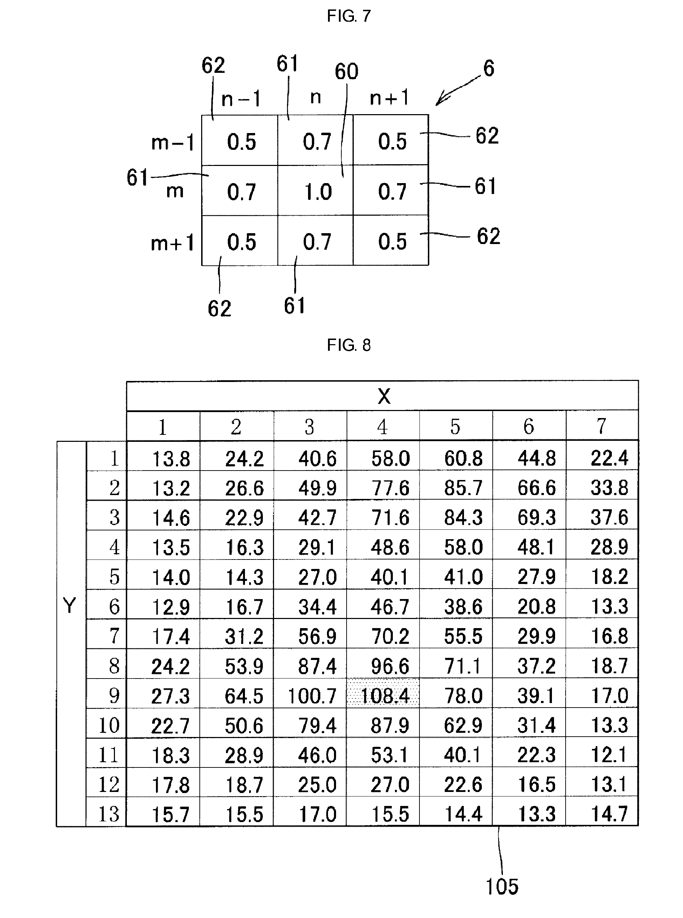

FIG. 7 illustrates one example of the correlation value table 6. The correlation value table 6 illustrated in FIG. 7 shows correlation values of the respective sensing areas 101 in the processing target area 104 in a case of a target area on coordinates (n, m). In the correlation value table 6, the target area correlation value 60 of the target area is set at 1.0. Moreover, the first correlation value 61 of each first sensing area which is the sensing area adjacent to the target area in a row direction or a column direction is set at 0.7. Further, the second correlation value 62 of each second sensing area which is the sensing area adjacent to the target area in a diagonal direction is set at 0.5.

In other words, the first correlation value 61 is set to be smaller than the target area correlation value 60, and the second correlation value 62 is set to be smaller than the first correlation value 61. The target area correlation value 60, the first correlation value 61, and the second correlation value 62 are set at values obtained by experiment so as to increase as an influence of the detection value in the sensing area 101 adjacent to the target area is large.

The correcting part 13 calculates the correlation correction value C(n,m) for the target area, that is, the sensing area on the coordinates (n, m), based on the following equation (1) on the assumption that the sensing area on the coordinates (X, Y) has the capacitance value DATA(X,Y), the sensing area on the coordinates (X, Y) has the correlation value MAT(X,Y) in the correlation value table 6, and the target area is located on the coordinates (n, m).

$$C(n,m) = MAT(n{-}1,m{-}1) \times DATA(n{-}1,m{-}1) + MAT(n,m{-}1) \times$$

$$DATA(n,m{-}1) + MAT(n{+}1,m{-}1) \times DATA(n{+}1,m{-}1) + MAT(n{-}1,m) \times DATA(n{-}1,m)$$

$$+ MAT(n,m) \times DATA(n,m) + MAT(n{+}1,m) \times DATA(n{+}1,m) + MAT(n{-}1,m{+}1) \times$$

$$DATA(n{-}1,m{+}1) + MAT(n,m{+}1) \times DATA(n,m{+}1) + MAT(n{+}1,m{+}1) \times$$

$$DATA(n{+}1,m{+}1) \ ... \ (1)$$

Next, the correcting part 13 determines whether or not the correlation correction values are acquired for all the sensing areas 101 (step S5). When the correlation correction values are not acquired for all the sensing areas 101 yet (NO in step S5), the correcting part 13 changes the target area to the sensing area 101 for which the correlation correction value is not acquired yet (step S6), and repeats steps S4 and S5 again.

Thus, the correlation correction value illustrated in FIG. 8 is calculated from the capacitance value illustrated in FIG. 6. As to the sensing area 101 located on an end of the touch panel 100 illustrated in FIG. 6, that is, the end sensing area on the X coordinate of 0 or 8 and the Y coordinate of 0 or 14, in a case where the end sensing area is set at the target area, the processing target area 104 partially deviates from the touch screen of the touch panel 100, so that the capacitance value cannot be obtained. Hence, when the correlation correction value is calculated with the items of the coordinates where the capacitance value cannot be obtained, set at zero in the above equation (1), the correlation correction value becomes small, which is inappropriate in some cases.

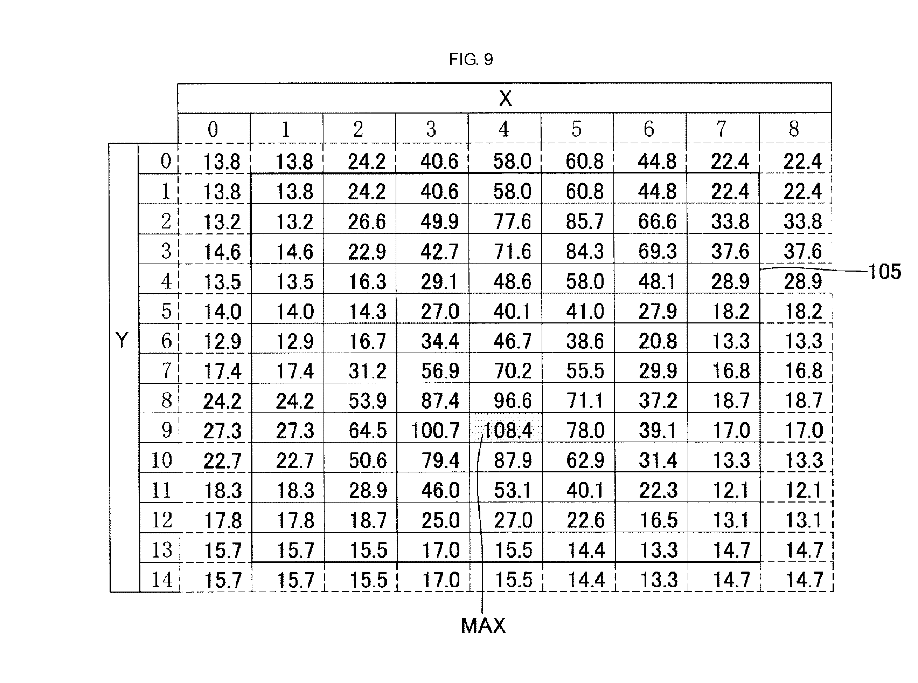

In step S4, preferably, the correlation correction value C(n,m) for an area 105 other than the end sensing areas is calculated based on the above equation (1). As to the end sensing areas shown with a broken line in FIG. 9, preferably, the correlation correction value for the sensing area 101 adjacent to and located inward of each end sensing area is acquired as the correlation correction value for each end sensing area.

When the correlation correction values are acquired for all the sensing areas 101 as described above (YES in step S5), the processing proceeds to step S11.

In step S11, next, the maximum value retrieving part 14 substitutes 1 for a variable i (step S11), and then retrieves the maximum value MAX from among all the correlation correction values (step S12: maximum value retrieving step). In the example illustrated in FIG. 9, the correlation correction value of 108.4 on coordinates (4, 9) corresponds to the maximum value MAX, and the sensing area 101 on the coordinates (4, 9) corresponds to the maximum area.

Next, the subsequent touched position acquiring part 17 determines whether or not the variable i is 1 (step S13: subsequent touched position acquiring step). When the variable i is 1 (YES in step S13), the maximum value MAX retrieved in step S12 is determined as the maximum value MAX which is initially retrieved. Therefore, the subsequent touched position acquiring part 17 sets the maximum value MAX as an initial maximum value MAX0 (step S14: subsequent touched position acquiring step), and then the processing proceeds to step S16.

In step S16, next, the touched position acquiring part 15 calculates a centroid position as to an extraction area including the maximum area and the sensing areas adjacent to the maximum area, based on the correlation correction values (step S16: touched position acquiring step).

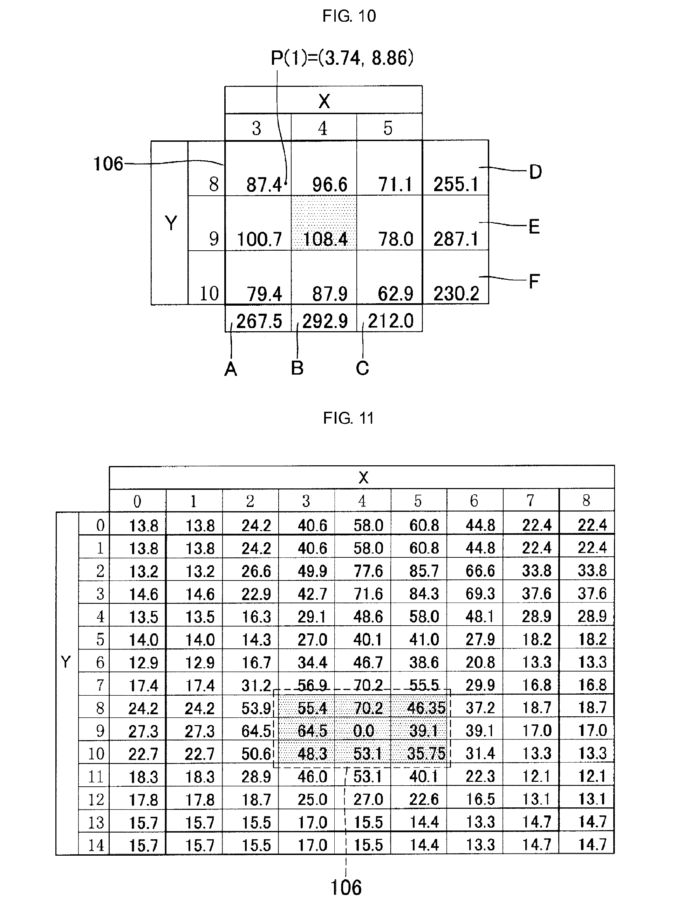

FIG. 10 illustrates the method of calculating the centroid position, in the touched position acquiring step. In the case where the sensing area 101 on the coordinates (4, 9) illustrated in FIG. 9 is the maximum area, an extraction area 106 is extracted as illustrated in FIG. 10. The extraction area 106 includes the maximum area on the coordinates (4, 9) and the sensing areas adjacent to the maximum area.

The touched position acquiring part 15 calculates, as a lengthwise total value A, a sum of the correlation correction values on the coordinates (3, 8), (3, 9), and (3, 10) arranged in the lengthwise direction (Y direction). Moreover, the touched position acquiring part 15 calculates, as a lengthwise total value B, a sum of the correlation correction values on the coordinates (4, 8), (4, 9), and (4, 10) arranged in the lengthwise direction. Further, the touched position acquiring part 15 calculates, as a lengthwise total value C, a sum of the correlation correction values on the coordinates (5, 8), (5, 9), and (5, 10) arranged in the lengthwise direction. On the other hand, the touched position acquiring part 15 calculates, as a widthwise total value D, a sum of the correlation correction values on the coordinates (3, 8), (4, 8), and (5, 8) arranged in the widthwise direction (X direction). Moreover, the touched position acquiring part 15 calculates, as a widthwise total value E, a sum of the correlation correction values on the coordinates (3, 9), (4, 9), and (5, 9) arranged in the widthwise direction. Further, the touched position acquiring part 15 calculates, as a widthwise total value F, a sum of the correlation correction values on the coordinates (3, 10), (4, 10), and (5, 10) arranged in the widthwise direction.

The touched position acquiring part 15 calculates the X coordinate J of the centroid position, based on the following equations (2) to (4). Moreover, the touched position acquiring part 15 calculates the Y coordinate K of the centroid position, based on the following equations (5) to (7). It is assumed herein that the maximum area is located on the coordinates (G, H).

$$S = (A - 2 \times B + C)/2 = (267.5 - 2 \times 292.9 + 212)/2 = -53.15 \ldots (2)$$

$$T = (C - A)/2 = (212 - 267.5)/2 = -27.75 \ldots (3)$$

$$\text{X coordinate J of centroid position} = (-T/S/2) + G = \{-(-27.75)/(-53.15)/2\} + 4 = 3.74 \ldots (4)$$

$$U = (D - 2 \times E + F)/2 = (255.1 - 2 \times 287.1 + 230.2)/2 = -44.45 \ldots (5)$$

$$V = (F - D)/2 = (230.2 - 255.1)/2 = -12.45 \ldots (6)$$

$$\text{Y coordinate K of centroid position} = (-V/U/2) + H = \{-(-12.45)/(-44.45)/2\} + 9 = 8.86 \ldots (7)$$

Thus, the coordinates (J, K), that is, the coordinates (3.74, 8.86) of the centroid position are obtained based on the above equations (2) to (7).

Next, the touched position acquiring part 15 acquires, as a touched position P(i), the centroid position on the coordinates (J, K) of (3.74, 8.86) thus obtained (step S17: touched position acquiring step). In this case, in steps S3 to S6, the correlation correction value is calculated in consideration of the influence of the sensing area 101 adjacent to each sensing area, using the correlation value table 6, and the touched position P(i) is obtained based on the correlation correction value. Thus, the positional accuracy of the touched position P(i) is improved.

Next, the preparing part 16 executes the preparing step in steps S18 to S20. First, the preparing part 16 sets the correlation correction value for the maximum area at 0 (step S18). In the example illustrated in FIG. 11, the correlation correction value on the coordinates (4, 9) is set at 0. In step S18, the correlation correction value for the maximum area is not necessarily set at 0 as long as the maximum area is not determined as the touched position in step S15. For example, the correlation correction value for the maximum area may be decreased to a half.

As illustrated in FIG. 11, next, the preparing part 16 sets the correlation correction values for the first sensing areas (4, 8), (3, 9), (5, 9), and (4, 10) adjacent to the maximum area (4, 9) to be equal to the correlation correction values for the sensing areas (4, 7), (2, 9), (6, 9), and (4, 11) adjacent to the first sensing areas (4, 8), (3, 9), (5, 9), and (4, 10), respectively, and located outward of the extraction area 106 (step S19).

As illustrated in FIG. 11, next, the preparing part 16 sets the correlation correction values for the second sensing areas (3, 8), (5, 8), (3, 10), and (5, 10) adjacent to the maximum area (4, 9) at mean values of the correlation correction values for the two sensing areas, that is, the sensing areas (3, 7) and (2, 8), the sensing areas (5, 7) and (6, 8), the sensing areas (2, 10) and (3, 11), and the sensing areas (6, 10) and (5, 11), adjacent to the second sensing areas (3, 8), (5, 8), (3, 10), and (5, 10) in the row direction and the column direction, respectively, and located outward of the extraction area 106 (step S20).

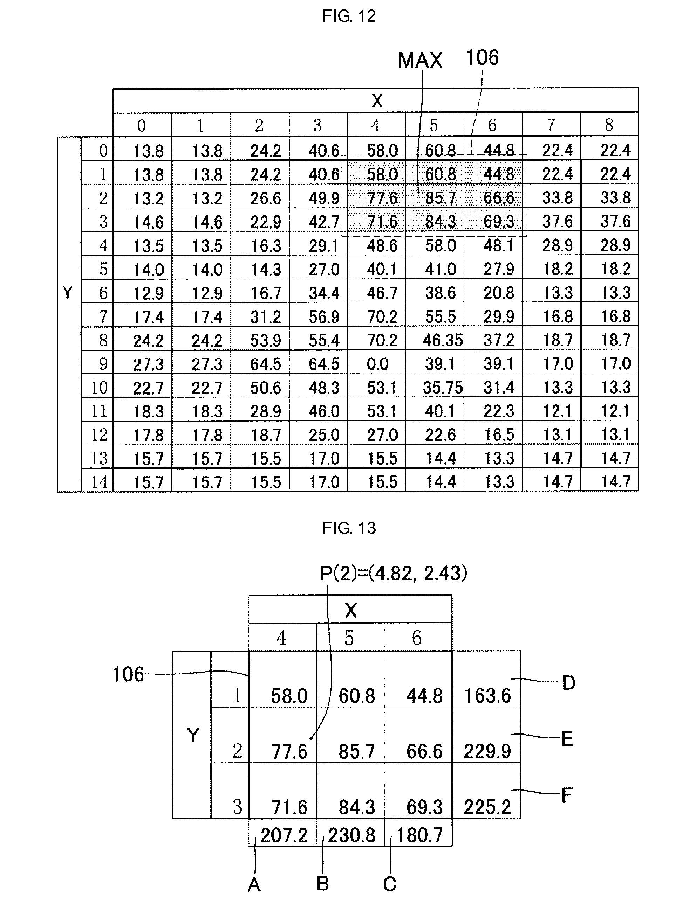

Next, the subsequent touched position acquiring part 17 adds 1 to the variable i (step S21), and then the processing returns to step S12 again. In step S12, the maximum value retrieving part 14 retrieves the maximum value MAX from among all the correlation correction values (step S12: maximum value retrieving step). In the example illustrated in FIG. 12, the correlation correction value of 85.7 on the coordinates (5, 2) corresponds to the new maximum value MAX, and the sensing area on the coordinates (5, 2) corresponds to the new maximum area.

In step S13, since the variable i is equal to 2 (i.e., the variable i is not 1) (NO in step S13), the processing proceeds to step S15. In step S15, the subsequent touched position acquiring part 17 compares a value obtained by multiplying the initial maximum value MAX0 by a reference ratio of 0.7 with the new maximum value MAX (step S15). When the maximum value MAX is equal to or more than the value of MAX0 x 0.7 (NO in step S 15), the presence of a subsequent touched position is considered. Therefore, the processing in and after step S16 is executed. Thus, the second touched position P(2) of (4.82, 2.43) is obtained in step S 17 as illustrated in FIG. 13.

Thereafter, the processing in steps S18 to S21 is executed, and then the processing in step S12 is executed again. In step S12, the subsequent maximum value MAX is 70.2 on the coordinates (4, 7). In this case, in step S15, the subsequent maximum value MAX of 70.2 is less than the value of MAX0 $\times$ 0.7 (YES in step S 15). In other words, since the correlation correction value on the coordinates (4, 7) is excessively smaller than the initial maximum value MAX0, the absence of a subsequent (third) touched position is considered. Therefore, when the maximum value MAX is less than the value of MAX0 $\times$ 0.7 (YES in step S 15), the touched position acquiring step is finished. Then, the processing proceeds to step S31 in order to determine whether or not the touch panel 100 is a defective.

In step S31 (determining step), next, the determining part 18 determines whether or not the number of touched positions detected in step S 17 is equal to the number of touches in step S1. Specifically, the number of touches is two in step S1. Moreover, when the detected number of touched positions is two, the value of the variable i is 3. Therefore, the determining part 18 determines whether or not the value of the variable i is 3. The variable i which is not 3 (NO in step S31) indicates that the number of touches in step S 1 cannot be correctly detected. Therefore, the determining part 18 determines that the touch panel 100 is a defective, and sends the determination result to the display part 4 such that the display part 4 displays the determination result (step S37). Then the processing is finished.

On the other hand, the variable i which is 3 (YES in step S31) indicates that the number of touches in step S 1, that is, the two touches can be correctly detected. Therefore, the processing proceeds to step S32 in order that the determining part 18 determines the touched position detection accuracy.

Next, the determining part 18 calculates a deviation amount D1 between the inspection coordinate TP1 and the touched position P(1) (step S32: determining step). Specifically, the deviation amount D1 is calculated based on, for example, the following equation (8) on the assumption that the inspection coordinate TP1 is located on coordinates (Xt1, Yt1) and the touched position P(1) is located on coordinates (X1, Y1).

$$D1 = \sqrt{\{(Xt1 - X1)^2 + (Yt1 - Y1)^2\}} \ ... \ (8)$$

Next, the determining part 18 compares a preset reference amount Ref with the deviation amount D1, as an allowable range of an error upon detection of the touched position on the touch panel 100 (hereinafter, such an error is referred to as a "touched position detection error") (step S33: determining step). The deviation amount D1 exceeding the reference amount Ref (YES in step S33) indicates that the touched position detection accuracy deviates from the allowable range. Therefore, the determining part 18 determines that the touch panel 100 is a defective, and sends the determination result to the display part 4 such that the display part 4 displays the determination result (step S37). Then the processing is finished.

On the other hand, when the deviation amount D1 is equal to or less than the reference amount Ref (NO in step S33), the processing proceeds to step S34 in order that the determining part 18 makes a determination on the subsequent touched position. In step S34, the determining part 18 calculates a deviation amount D2 between the inspection coordinate TP2 and the touched position P(2) (step S34: determining step). Specifically, the deviation amount D2 is calculated based on, for example, the following equation (9) on the assumption that the inspection coordinate TP2 is located on coordinates (Xt2, Yt2) and the touched position P(2) is located on coordinates (X2, Y2).

$$D2 = \sqrt{\{(Xt2 - X2)^2 + (Yt2 - Y2)^2\}} \ \dots \ (9)$$

Next, the determining part 18 compares the reference amount Ref with the deviation amount D2 (step S35: determining step). The deviation amount D2 exceeding the reference amount Ref (YES in step S35) indicates that the touched position detection accuracy deviates from the allowable range. Therefore, the determining part 18 determines that the touch panel 100 is a defective, and sends the determination result to the display part 4 such that the display part 4 displays the determination result (step S37). Then the processing is finished.

On the other hand, when the deviation amount D2 is equal to or less than the reference amount Ref (NO in step S35), the determining part 18 determines that the touch panel 100 is a non-defective, and sends the determination result to the display part 4 such that the display part 4 displays the determination result (step S36). Then the processing is finished.

The determining part 18 does not necessarily calculate the deviation amounts D1 and D2, based on the above equations (8) and (9) in steps S32 and S34. For example, the determination part 18 may compare the deviation amount in the X direction and the deviation amount in the Y direction with the reference amount, respectively.

The processing in steps S31 to S37 allows a determination whether or not the touch panel 100 is a defective, based on the touched position acquired with high accuracy in step S 17. Therefore, it is possible to inspect the touch panel 100 with improved accuracy.

In an illustrative embodiment, the touch panel inspecting apparatus 1 includes the three pseudo fingers; however, the number of pseudo fingers is not limited to three. In an illustrative embodiment, the touch panel 100 is touched at two positions in step S1; however, the number of touches may be one or may be equal to or more than three. The processing in steps S31 to S35 may be appropriately changed in accordance with the number of touches on the touch panel 100.

The foregoing disclosure has been specifically described and illustrated in connection with certain illustrative embodiments. However, it is clearly understood that the embodiments are by way of illustration and example only and are not to be taken by way of limitation. The spirit and scope of the invention are limited only by the terms of the appended claims.

**Claims**

1. A method for detecting a touched position on a touch panel having a touch screen divided into a plurality of sensing areas arranged in a lattice form and designated with two-dimensional coordinates, the method comprising:

    acquiring a detection value detected in each sensing area;
    correcting each detection value, based on a correlation value corresponding to a numerical influence to be exerted on the detection value in each sensing area by the detection value in the sensing area adjacent to each sensing area, and calculating a correlation correction value for each sensing area;
    retrieving the maximum value from among the correlation correction values; and
    defining the sensing area for which the correlation correction value is the maximum value, as a maximum area, calculating a centroid position as to an area including the maximum area and the sensing areas adjacent to the maximum area, based on the correlation correction values, and acquiring the calculated centroid position as a touched position.

2. The method of claim 1, further comprising:

decreasing the correlation correction value for the maximum area after the acquisition of the touched position; and acquiring a new touched position by repeating the maximum value retrieving and the touched position acquiring again after the execution of the decreasing the correlation correction value.

3. The method of claim 2,
wherein the correlation correction values for the sensing areas surrounding the maximum area are corrected based on the correlation correction values for the outer sensing areas adjacent to and located outward of the sensing areas surrounding the maximum area.

4. The method of claim 2 or 3,
wherein the new touched position is not acquired when a ratio of the maximum value retrieved in the repeated maximum value retrieving step to the maximum value retrieved initially in the maximum value retrieving step is less than a preset reference ratio.

5. The method of any one of claims 1 to 4,
wherein the correlation values include a target area correlation value specified for a target area corresponding to the sensing area to be processed, a first correlation value specified for each first sensing area adjacent to the target area in a row direction or a column direction, and a second correlation value specified for each second sensing area adjacent to the target area in a diagonal direction,
wherein the first correlation value is smaller than the target area correlation value,
wherein the second correlation value is smaller than the first correlation value, and
wherein the correcting step includes calculating the correlation correction value for the target area by allocating the sensing areas to the target area in sequence, and adding a value obtained by multiplying the detection value in the target area by the target area correlation value, a value obtained by multiplying the detection value in each first sensing area by the first correlation value, and a value obtained by multiplying the detection value in each second sensing area by the second correlation value.

6. The method of any one of claims 1 to 5,
wherein the correlation correction value for the sensing area located on an edge of the touch screen, among the plurality of sensing areas is set to be equal to the correlation correction value for the sensing area adjacent to and located inward of the sensing area located on the edge of the touch screen.

7. A method for inspecting a touch panel, the method comprising:

bringing one or more pseudo fingers into contact with a touch screen of a touch panel, the touch screen divided into a plurality of sensing areas arranged in a lattice form and designated with two-dimensional coordinates;
performing the method for detecting a touched position on a touch panel of any one of claims 1 to 6 on the touch panel; and
determining whether or not at least one of deviation amounts between one or more detected touched positions and one or more contact positions on the touch screen with the one or more pseudo fingers exceeds a preset reference amount.

8. A touch panel inspecting apparatus comprising:

a touch mechanism configured to bring one or more pseudo fingers into contact with a touch screen of a touch panel, the touch screen divided into a plurality of sensing areas arranged in a lattice form and designated with two-dimensional coordinates;
a touched position detecting part configured to perform the method for detecting a touched position on a touch panel of any one of claims 1 to 6 on the touch panel; and
a determining part configured to determine whether or not at least one of deviation amounts between one or more touched positions detected by the touched position detecting part and one or more contact positions on the touch screen with the one or more pseudo fingers by the touch mechanism exceeds a preset reference amount.

FIG. 1

FIG. 2

EP 2 908 229 A1

CONTROL PART

10

11 — TOUCH PROCESSING PART

12 — DETECTION PROCESSING PART

13 — CORRECTING PART

14 — MAXIMUM VALUE RETRIEVING PART

15 — TOUCHED POSITION ACQUIRING PART

16 — PREPARING PART

17 — SUBSEQUENT TOUCHED POSITION ACQUIRING PART

18 — DETERMINING PART

DISPLAY PART — 4

1

PSEUDO FINGER DRIVE MECHANISM — 2

21a 21b 21c

3

CAPACITANCE MEASUREMENT CIRCUIT

X-LINE CONNECTION CIRCUIT — 31

103

102

100

101

Y-LINE CONNECTION CIRCUIT

32

101 101

TP1

TP2

FIG. 3

```
                    ( START )
                         │
S1                       ▼
┌────────────────────────────────────────────┐
│ ALLOW PSEUDO FINGER 21a TO TOUCH INSPECTION │
│ COORDINATE TP1 AND PSEUDO FINGER 21c TO TOUCH│
│ INSPECTION COORDINATE TP2 ON TOUCH PANEL 100 │
└────────────────────────────────────────────┘
S2                       ▼
┌────────────────────────────────────────────┐
│         MEASURE CAPACITANCE VALUE FOR        │
│             EACH SENSING AREA                │
└────────────────────────────────────────────┘
S3                       ▼
┌────────────────────────────────────────────┐
│     SET ONE OF SENSING AREAS AT TARGET AREA  │
└────────────────────────────────────────────┘
                         ▼
S4                       ▼
┌────────────────────────────────────────────┐
│    CALCULATE CORRELATION CORRECTION VALUE    │
│  FOR TARGET AREA, BASED ON DETECTION VALUE IN│
│   TARGET AREA, DETECTION VALUES IN SENSING   │
│     AREAS ADJACENT TO TARGET AREA, AND       │
│         CORRELATION VALUE TABLE              │
└────────────────────────────────────────────┘
                                      S6
                              ┌────────────────────────────┐
                              │ CHANGE TARGET AREA TO        │
                              │ DIFFERENT SENSING AREA       │
                              └────────────────────────────┘
                         ▼                    ▲
S5          ◇ CORRELATION ◇                   │
      < CORRECTION VALUES ACQUIRED >   No──────┘
          FOR ALL SENSING
              AREAS?
                         │ Yes
                         ▼
                        ※1
```

FIG. 4

※1

S11

VARIABLE i = 1

S12

RETRIEVE MAXIMUM VALUE MAX FROM AMONG ALL
CORRELATION CORRECTION VALUES

S13    i = 1 ?    Yes

No

S14

INITIAL MAXIMUM
VALUE MAX0 = MAX

※2 ← Yes   S15   MAX < MAX0 × 0.7 ?

No

S16

CALCULATE CENTROID POSITION AS TO EXTRACTION AREA
INCLUDING MAXIMUM AREA AND SENSING AREAS ADJACENT TO
MAXIMUM AREA, BASED ON CORRELATION CORRECTION VALUES

S17

ACQUIRE CALCULATED CENTROID POSITION AS
TOUCHED POSITION P(i)

S18

SET CORRELATION CORRECTION VALUE FOR
MAXIMUM AREA AT 0

S19

SET CORRELATION CORRECTION VALUES FOR FIRST SENSING
AREAS ADJACENT TO MAXIMUM AREA TO BE EQUAL TO
CORRELATION CORRECTION VALUES FOR SENSING AREAS
ADJACENT TO FIRST SENSING AREAS, RESPECTIVELY, AND
LOCATED OUTWARD OF EXTRACTION AREA

S20

SET CORRELATION CORRECTION VALUES FOR SECOND
SENSING AREAS ADJACENT TO MAXIMUM AREA AT MEAN
VALUES OF CORRELATION CORRECTION VALUES FOR TWO
SENSING AREAS ADJACENT TO SECOND SENSING AREAS IN
ROW DIRECTION AND COLUMN DIRECTION, RESPECTIVELY,
AND LOCATED OUTWARD OF EXTRACTION AREA

S21

VARIABLE i = i + 1

FIG. 5

S31 ⟶ i = 3 ? — No

Yes ↓

S32 — CALCULATE DEVIATION AMOUNT D1 BETWEEN INSPECTION COORDINATE TP1 AND TOUCHED POSITION P(1)

S33 — D1 > Ref ? — Yes

No ↓

S34 — CALCULATE DEVIATION AMOUNT D2 BETWEEN INSPECTION COORDINATE TP2 AND TOUCHED POSITION P(2)

S35 — D2 > Ref ? — Yes

No ↓

S36 — DETERMINE AS NON-DEFECTIVE

S37 — DETERMINE AS DEFECTIVE

END

FIG. 6

| | | X | | | | | | | | |
|---|---|---|---|---|---|---|---|---|---|---|
| | | 0 | 1 | 2 | 3 | 4 | 5 | 6 | 7 | 8 |
| Y | 0 | 2 | 3 | 2 | 4 | 3 | 4 | 3 | 2 | 1 |
| | 1 | 1 | 2 | 3 | 8 | 10 | 12 | 9 | 1 | 2 |
| | 2 | 3 | 2 | 4 | 11 | 17 | 21 | 13 | 4 | 2 |
| | 3 | 1 | 2 | 2 | 8 | 11 | 19 | 14 | 8 | 1 |
| | 4 | 4 | 3 | 3 | 2 | 9 | 13 | 9 | 4 | 3 |
| | 5 | 2 | 1 | 2 | 3 | 7 | 3 | 2 | 2 | 2 |
| | 6 | 3 | 3 | 2 | 4 | 13 | 8 | 3 | 3 | 2 |
| | 7 | 4 | 1 | 2 | 9 | 12 | 9 | 1 | 2 | 3 |
| | 8 | 2 | 3 | 9 | 19 | 20 | 14 | 8 | 2 | 4 |
| | 9 | 1 | 4 | 13 | 24 | 23 | 16 | 4 | 2 | 3 |
| | 10 | 1 | 2 | 8 | 16 | 17 | 14 | 2 | 1 | 2 |
| | 11 | 3 | 3 | 2 | 8 | 9 | 7 | 3 | 3 | 2 |
| | 12 | 6 | 2 | 3 | 3 | 6 | 2 | 3 | 2 | 1 |
| | 13 | 3 | 2 | 4 | 3 | 1 | 3 | 3 | 2 | 3 |
| | 14 | 1 | 2 | 2 | 2 | 3 | 1 | 2 | 3 | 5 |

104

101

101

100

101

101

FIG. 7

FIG. 8

| | | X | | | | | | |
|---|---|---|---|---|---|---|---|---|
| | | 1 | 2 | 3 | 4 | 5 | 6 | 7 |
| Y | 1 | 13.8 | 24.2 | 40.6 | 58.0 | 60.8 | 44.8 | 22.4 |
| | 2 | 13.2 | 26.6 | 49.9 | 77.6 | 85.7 | 66.6 | 33.8 |
| | 3 | 14.6 | 22.9 | 42.7 | 71.6 | 84.3 | 69.3 | 37.6 |
| | 4 | 13.5 | 16.3 | 29.1 | 48.6 | 58.0 | 48.1 | 28.9 |
| | 5 | 14.0 | 14.3 | 27.0 | 40.1 | 41.0 | 27.9 | 18.2 |
| | 6 | 12.9 | 16.7 | 34.4 | 46.7 | 38.6 | 20.8 | 13.3 |
| | 7 | 17.4 | 31.2 | 56.9 | 70.2 | 55.5 | 29.9 | 16.8 |
| | 8 | 24.2 | 53.9 | 87.4 | 96.6 | 71.1 | 37.2 | 18.7 |
| | 9 | 27.3 | 64.5 | 100.7 | 108.4 | 78.0 | 39.1 | 17.0 |
| | 10 | 22.7 | 50.6 | 79.4 | 87.9 | 62.9 | 31.4 | 13.3 |
| | 11 | 18.3 | 28.9 | 46.0 | 53.1 | 40.1 | 22.3 | 12.1 |
| | 12 | 17.8 | 18.7 | 25.0 | 27.0 | 22.6 | 16.5 | 13.1 |
| | 13 | 15.7 | 15.5 | 17.0 | 15.5 | 14.4 | 13.3 | 14.7 |

105

FIG. 9

| | | 0 | 1 | 2 | 3 | 4 | 5 | 6 | 7 | 8 |
|---|---|---|---|---|---|---|---|---|---|---|
| | | | | | | X | | | | |
| | 0 | 13.8 | 13.8 | 24.2 | 40.6 | 58.0 | 60.8 | 44.8 | 22.4 | 22.4 |
| | 1 | 13.8 | 13.8 | 24.2 | 40.6 | 58.0 | 60.8 | 44.8 | 22.4 | 22.4 |
| | 2 | 13.2 | 13.2 | 26.6 | 49.9 | 77.6 | 85.7 | 66.6 | 33.8 | 33.8 |
| | 3 | 14.6 | 14.6 | 22.9 | 42.7 | 71.6 | 84.3 | 69.3 | 37.6 | 37.6 |
| | 4 | 13.5 | 13.5 | 16.3 | 29.1 | 48.6 | 58.0 | 48.1 | 28.9 | 28.9 |
| | 5 | 14.0 | 14.0 | 14.3 | 27.0 | 40.1 | 41.0 | 27.9 | 18.2 | 18.2 |
| Y | 6 | 12.9 | 12.9 | 16.7 | 34.4 | 46.7 | 38.6 | 20.8 | 13.3 | 13.3 |
| | 7 | 17.4 | 17.4 | 31.2 | 56.9 | 70.2 | 55.5 | 29.9 | 16.8 | 16.8 |
| | 8 | 24.2 | 24.2 | 53.9 | 87.4 | 96.6 | 71.1 | 37.2 | 18.7 | 18.7 |
| | 9 | 27.3 | 27.3 | 64.5 | 100.7 | 108.4 | 78.0 | 39.1 | 17.0 | 17.0 |
| | 10 | 22.7 | 22.7 | 50.6 | 79.4 | 87.9 | 62.9 | 31.4 | 13.3 | 13.3 |
| | 11 | 18.3 | 18.3 | 28.9 | 46.0 | 53.1 | 40.1 | 22.3 | 12.1 | 12.1 |
| | 12 | 17.8 | 17.8 | 18.7 | 25.0 | 27.0 | 22.6 | 16.5 | 13.1 | 13.1 |
| | 13 | 15.7 | 15.7 | 15.5 | 17.0 | 15.5 | 14.4 | 13.3 | 14.7 | 14.7 |
| | 14 | 15.7 | 15.7 | 15.5 | 17.0 | 15.5 | 14.4 | 13.3 | 14.7 | 14.7 |

105

MAX

EP 2 908 229 A1

FIG. 10

P(1)=(3.74, 8.86)

| | X | | | |
|---|---|---|---|---|
| | 3 | 4 | 5 | |
| 8 | 87.4 | 96.6 | 71.1 | 255.1 (D) |
| 9 | 100.7 | 108.4 | 78.0 | 287.1 (E) |
| 10 | 79.4 | 87.9 | 62.9 | 230.2 (F) |
| | 267.5 (A) | 292.9 (B) | 212.0 (C) | |

106

FIG. 11

| | | X | | | | | | | | |
|---|---|---|---|---|---|---|---|---|---|---|
| | | 0 | 1 | 2 | 3 | 4 | 5 | 6 | 7 | 8 |
| | 0 | 13.8 | 13.8 | 24.2 | 40.6 | 58.0 | 60.8 | 44.8 | 22.4 | 22.4 |
| | 1 | 13.8 | 13.8 | 24.2 | 40.6 | 58.0 | 60.8 | 44.8 | 22.4 | 22.4 |
| | 2 | 13.2 | 13.2 | 26.6 | 49.9 | 77.6 | 85.7 | 66.6 | 33.8 | 33.8 |
| | 3 | 14.6 | 14.6 | 22.9 | 42.7 | 71.6 | 84.3 | 69.3 | 37.6 | 37.6 |
| | 4 | 13.5 | 13.5 | 16.3 | 29.1 | 48.6 | 58.0 | 48.1 | 28.9 | 28.9 |
| | 5 | 14.0 | 14.0 | 14.3 | 27.0 | 40.1 | 41.0 | 27.9 | 18.2 | 18.2 |
| Y | 6 | 12.9 | 12.9 | 16.7 | 34.4 | 46.7 | 38.6 | 20.8 | 13.3 | 13.3 |
| | 7 | 17.4 | 17.4 | 31.2 | 56.9 | 70.2 | 55.5 | 29.9 | 16.8 | 16.8 |
| | 8 | 24.2 | 24.2 | 53.9 | 55.4 | 70.2 | 46.35 | 37.2 | 18.7 | 18.7 |
| | 9 | 27.3 | 27.3 | 64.5 | 64.5 | 0.0 | 39.1 | 39.1 | 17.0 | 17.0 |
| | 10 | 22.7 | 22.7 | 50.6 | 48.3 | 53.1 | 35.75 | 31.4 | 13.3 | 13.3 |
| | 11 | 18.3 | 18.3 | 28.9 | 46.0 | 53.1 | 40.1 | 22.3 | 12.1 | 12.1 |
| | 12 | 17.8 | 17.8 | 18.7 | 25.0 | 27.0 | 22.6 | 16.5 | 13.1 | 13.1 |
| | 13 | 15.7 | 15.7 | 15.5 | 17.0 | 15.5 | 14.4 | 13.3 | 14.7 | 14.7 |
| | 14 | 15.7 | 15.7 | 15.5 | 17.0 | 15.5 | 14.4 | 13.3 | 14.7 | 14.7 |

106

FIG. 12

MAX   106

| | | X | | | | | | | | |
|---|---|---|---|---|---|---|---|---|---|---|
| | | 0 | 1 | 2 | 3 | 4 | 5 | 6 | 7 | 8 |
| | 0 | 13.8 | 13.8 | 24.2 | 40.6 | 58.0 | 60.8 | 44.8 | 22.4 | 22.4 |
| | 1 | 13.8 | 13.8 | 24.2 | 40.6 | 58.0 | 60.8 | 44.8 | 22.4 | 22.4 |
| | 2 | 13.2 | 13.2 | 26.6 | 49.9 | 77.6 | 85.7 | 66.6 | 33.8 | 33.8 |
| | 3 | 14.6 | 14.6 | 22.9 | 42.7 | 71.6 | 84.3 | 69.3 | 37.6 | 37.6 |
| | 4 | 13.5 | 13.5 | 16.3 | 29.1 | 48.6 | 58.0 | 48.1 | 28.9 | 28.9 |
| | 5 | 14.0 | 14.0 | 14.3 | 27.0 | 40.1 | 41.0 | 27.9 | 18.2 | 18.2 |
| Y | 6 | 12.9 | 12.9 | 16.7 | 34.4 | 46.7 | 38.6 | 20.8 | 13.3 | 13.3 |
| | 7 | 17.4 | 17.4 | 31.2 | 56.9 | 70.2 | 55.5 | 29.9 | 16.8 | 16.8 |
| | 8 | 24.2 | 24.2 | 53.9 | 55.4 | 70.2 | 46.35 | 37.2 | 18.7 | 18.7 |
| | 9 | 27.3 | 27.3 | 64.5 | 64.5 | 0.0 | 39.1 | 39.1 | 17.0 | 17.0 |
| | 10 | 22.7 | 22.7 | 50.6 | 48.3 | 53.1 | 35.75 | 31.4 | 13.3 | 13.3 |
| | 11 | 18.3 | 18.3 | 28.9 | 46.0 | 53.1 | 40.1 | 22.3 | 12.1 | 12.1 |
| | 12 | 17.8 | 17.8 | 18.7 | 25.0 | 27.0 | 22.6 | 16.5 | 13.1 | 13.1 |
| | 13 | 15.7 | 15.7 | 15.5 | 17.0 | 15.5 | 14.4 | 13.3 | 14.7 | 14.7 |
| | 14 | 15.7 | 15.7 | 15.5 | 17.0 | 15.5 | 14.4 | 13.3 | 14.7 | 14.7 |

FIG. 13

$P(2)=(4.82, 2.43)$

| | | X | | | | |
|---|---|---|---|---|---|---|
| | | 4 | 5 | 6 | | |
| 106 | 1 | 58.0 | 60.8 | 44.8 | 163.6 | D |
| Y | 2 | 77.6 | 85.7 | 66.6 | 229.9 | E |
| | 3 | 71.6 | 84.3 | 69.3 | 225.2 | F |
| | | 207.2 | 230.8 | 180.7 | | |
| | | A | B | C | | |

FIG. 14

| | | X | | | | | | | | |
|---|---|---|---|---|---|---|---|---|---|---|
| | | 0 | 1 | 2 | 3 | 4 | 5 | 6 | 7 | 8 |
| | 0 | 13.8 | 13.8 | 24.2 | 40.6 | 58.0 | 60.8 | 44.8 | 22.4 | 22.4 |
| | 1 | 13.8 | 13.8 | 24.2 | 40.6 | 20.3 | 0.0 | 11.2 | 22.4 | 22.4 |
| | 2 | 13.2 | 13.2 | 26.6 | 49.9 | 49.9 | 0.0 | 33.8 | 33.8 | 33.8 |
| | 3 | 14.6 | 14.6 | 22.9 | 42.7 | 45.65 | 58.0 | 42.85 | 37.6 | 37.6 |
| | 4 | 13.5 | 13.5 | 16.3 | 29.1 | 48.6 | 58.0 | 48.1 | 28.9 | 28.9 |
| | 5 | 14.0 | 14.0 | 14.3 | 27.0 | 40.1 | 41.0 | 27.9 | 18.2 | 18.2 |
| Y | 6 | 12.9 | 12.9 | 16.7 | 34.4 | 46.7 | 38.6 | 20.8 | 13.3 | 13.3 |
| | 7 | 17.4 | 17.4 | 31.2 | 56.9 | 70.2 | 55.5 | 29.9 | 16.8 | 16.8 |
| | 8 | 24.2 | 24.2 | 53.9 | 55.4 | 70.2 | 46.35 | 37.2 | 18.7 | 18.7 |
| | 9 | 27.3 | 27.3 | 64.5 | 64.5 | 0.0 | 39.1 | 39.1 | 17.0 | 17.0 |
| | 10 | 22.7 | 22.7 | 50.6 | 48.3 | 53.1 | 35.75 | 31.4 | 13.3 | 13.3 |
| | 11 | 18.3 | 18.3 | 28.9 | 46.0 | 53.1 | 40.1 | 22.3 | 12.1 | 12.1 |
| | 12 | 17.8 | 17.8 | 18.7 | 25.0 | 27.0 | 22.6 | 16.5 | 13.1 | 13.1 |
| | 13 | 15.7 | 15.7 | 15.5 | 17.0 | 15.5 | 14.4 | 13.3 | 14.7 | 14.7 |
| | 14 | 15.7 | 15.7 | 15.5 | 17.0 | 15.5 | 14.4 | 13.3 | 14.7 | 14.7 |

Europäisches
Patentamt

European
Patent Office

Office européen
des brevets

# EUROPEAN SEARCH REPORT

Application Number

EP 15 15 5317

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 426 582 A2 (APPLE INC [US]) 7 March 2012 (2012-03-07) * abstract; figures 2-5, 16, 17A-E * * paragraph [0078] - paragraph [0084] * ----- | 1-8 | INV. G06F3/041 G06F3/044 |
| X | US 2012/062474 A1 (WEISHAUPT ANDREAS [CH] ET AL) 15 March 2012 (2012-03-15) * abstract; figures 1,2 * * paragraph [0100] - paragraph [0132] * * paragraph [0049] - paragraph [0056] * ----- | 1-8 | |
| X | US 2009/207145 A1 (TSUZAKI RYOICHI [JP] ET AL) 20 August 2009 (2009-08-20) * abstract; figures 1, 8-21 * * paragraph [0061] - paragraph [0068] * ----- | 1-8 | |
| A | US 8 294 687 B1 (KSONDZYK PETRO [US]) 23 October 2012 (2012-10-23) * abstract; figure 27 * * column 22, line 52 - column 24, line 5 * ----- | 1-8 | |
| A | US 2013/057493 A1 (HWANG JONGHEE [KR] ET AL) 7 March 2013 (2013-03-07) * abstract; figures 3-14 * * paragraph [0037] - paragraph [0051] * ----- | 1-8 | TECHNICAL FIELDS SEARCHED (IPC) G06F |
| X | US 2003/189555 A1 (YAMASHITA SHUNICHI [JP]) 9 October 2003 (2003-10-09) * abstract; figures 1,4 * ----- | 7,8 | |

The present search report has been drawn up for all claims

| Place of search | Date of completion of the search | Examiner |
|---|---|---|
| Berlin | 23 June 2015 | Ernst, Monika |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2015

| Patent document cited in search report | | Publication date | Patent family member(s) | | Publication date |
|---|---|---|---|---|---|
| EP 2426582 | A2 | 07-03-2012 | AU | 2005246219 A1 | 01-12-2005 |
| | | | CA | 2557940 A1 | 01-12-2005 |
| | | | CA | 2807349 A1 | 01-12-2005 |
| | | | CA | 2807999 A1 | 01-12-2005 |
| | | | CA | 2841328 A1 | 01-12-2005 |
| | | | CN | 1942853 A | 04-04-2007 |
| | | | CN | 102169401 A | 31-08-2011 |
| | | | EP | 1745356 A2 | 24-01-2007 |
| | | | EP | 2345953 A2 | 20-07-2011 |
| | | | EP | 2426582 A2 | 07-03-2012 |
| | | | HK | 1160952 A1 | 11-07-2014 |
| | | | JP | 2007533044 A | 15-11-2007 |
| | | | JP | 2011081825 A | 21-04-2011 |
| | | | JP | 2012043460 A | 01-03-2012 |
| | | | JP | 2014222531 A | 27-11-2014 |
| | | | KR | 20070011450 A | 24-01-2007 |
| | | | KR | 20110003385 A | 11-01-2011 |
| | | | KR | 20130001320 A | 03-01-2013 |
| | | | KR | 20130044355 A | 02-05-2013 |
| | | | KR | 20130126726 A | 20-11-2013 |
| | | | KR | 20150005688 A | 14-01-2015 |
| | | | US | 2006097991 A1 | 11-05-2006 |
| | | | US | 2009066670 A1 | 12-03-2009 |
| | | | US | 2009096757 A1 | 16-04-2009 |
| | | | US | 2009096758 A1 | 16-04-2009 |
| | | | US | 2012105371 A1 | 03-05-2012 |
| | | | US | 2013106780 A1 | 02-05-2013 |
| | | | US | 2014062955 A1 | 06-03-2014 |
| | | | US | 2014078108 A1 | 20-03-2014 |
| | | | US | 2014300577 A1 | 09-10-2014 |
| | | | US | 2014300578 A1 | 09-10-2014 |
| | | | WO | 2005114369 A2 | 01-12-2005 |
| US 2012062474 | A1 | 15-03-2012 | NONE | | |
| US 2009207145 | A1 | 20-08-2009 | CN | 101510134 A | 19-08-2009 |
| | | | JP | 4626658 B2 | 09-02-2011 |
| | | | JP | 2009193329 A | 27-08-2009 |
| | | | KR | 20090088317 A | 19-08-2009 |
| | | | TW | 200939096 A | 16-09-2009 |
| | | | US | 2009207145 A1 | 20-08-2009 |
| US 8294687 | B1 | 23-10-2012 | CN | 103294299 A | 11-09-2013 |
| | | | US | 8294687 B1 | 23-10-2012 |
| | | | US | 2013234978 A1 | 12-09-2013 |
| | | | WO | 2013126098 A1 | 29-08-2013 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**

EP 15 15 5317

This annex lists the patent family members relating to the patent documents cited in the above-mentioned European search report.
The members are as contained in the European Patent Office EDP file on
The European Patent Office is in no way liable for these particulars which are merely given for the purpose of information.

23-06-2015

| Patent document cited in search report | Publication date | Patent family member(s) | Publication date |
|---|---|---|---|
| US 2013057493 A1 | 07-03-2013 | CN 102968207 A<br>KR 20130025266 A<br>US 2013057493 A1 | 13-03-2013<br>11-03-2013<br>07-03-2013 |
| US 2003189555 A1 | 09-10-2003 | JP 3871951 B2<br>JP 2003303051 A<br>TW I238970 B<br>US 2003189555 A1 | 24-01-2007<br>24-10-2003<br>01-09-2005<br>09-10-2003 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013134698 A